# EUROPEAN PATENT SPECIFICATION

(11) **EP 0 970 797 B1**
(45) Date of publication and mention of the grant of the patent: **05.03.2003**
(21) Application number: 99305454.3
(22) Date of filing: 08.07.1999
(51) Int. Cl.: B29C 47/06, B29D 30/60, B29C 47/10, B29C 31/10

(54) **Method and apparatus for the lamination of band-shaped uncured rubber materials**
Verfahren und Vorrichtung zur Laminierung bandförmigen unvulkanisierten Kautschukmaterials
Procédé et appareil pour laminer des bandes de caoutchouc non vulcanisé

(30) Priority: 08.07.1998 JP 19298698; 22.06.1999 JP 17509599
(43) Date of publication of application: 12.01.2000
(73) Proprietor: Bridgestone Corporation, Tokyo (JP)
(72) Inventor: Oku, Masaharu, Tokorozawa City, Saitama Pref. (JP); Ogawa, Yuichiro, Fuchu City, Tokyo (JP); Hatakeyama, Kazuya, Kodaira City, Tokyo (JP)
(74) Representative: Whalley, Kevin

(56) References cited:
- EP-A- 0 715 974
- CH-A- 479 391
- US-A- 3 223 572
- US-A- 5 148 943
- PATENT ABSTRACTS OF JAPAN vol. 1995, no. 09, 31 October 1995 (1995-10-31) & JP 07 156283 A (MITSUBISHI RAYON CO LTD), 20 June 1995 (1995-06-20)

## Description

This invention relates to a method and an apparatus for the lamination of band-shaped uncured rubber materials, and more particularly to a method of extruding two or more uncured rubber materials having different moduli (modulus of elasticity) after the curing through an extruder and laminating the extruded band-shaped rubber materials on a rotating support to form a set of rubber members and an apparatus for realizing such a method. Particularly, the invention relates to a method and an apparatus for the lamination of band-shaped uncured rubber members in the building of a pneumatic tire.

In the production of the composite comprised of various rubbers, a step of laying various uncured rubber members is required prior to the curing of the composite. This is applied when the composite is comprised of various rubbers and various reinforcing materials. In pneumatic tires, the composite is comprised of a reinforcing member such as a rubberized cord or the like and various rubber members. In a tire building step prior to the curing, therefore, there is provided a green tire formed by laying uncured rubber materials and reinforcing materials such as uncured rubberized cords and the like.

At present, there is a tendency that properties required in rubber composites inclusive of the tire are highly advanced and more diversified. And also, members constituting the rubber composite and members constituting the tire are more diversified in accordance with such a tendency. Therefore, it is obliged to more complicate the molding step. As a result, the complete automation of the molding step is difficult and it is still the present state to require hand work. However, as the hand work is added, a big improvement of molding efficiency can not be attained and the accuracy of laying various materials lowers. Particularly, in case of the tire, the laying accuracy depends upon the quality of the tire, so that it is strongly demanded to improve the laying accuracy together with the improvement of the molding efficiency.

In order to satisfy these demands with respect to the tire, JP-B-7-94155 proposes a method and an apparatus wherein an outlet orifice of a volumetric extruder is located in the vicinity of a position of arranging rubber material on a rotating support and the rubber material is directly extruded through the outlet orifice of the volumetric extruder onto the rotating support.

On the other hand, the high advancement and diversification of the properties required in the tire and the other rubber composite demand optimum properties in rubber used in each member constituting the tire and each part constituting the rubber composite. As a result of satisfying such a demand, there is caused a difference in the property between adjoining rubbers such as a considerably large modulus difference or the like.

With respect to the tire, joint face indicating a large modulus difference is existent in a greater part of the tire. Therefore, when the tire is run under loading over a long distance of several ten thousands kilometers, strain repeatedly and concentrically acts to these joint faces over a long time. As a result, troubles such as separation and the like are easily caused in the joint faces to lower the durability.

However, the above publication does not mention such troubles and the countermeasure for holding or improving the durability at all. On the other hand, in the rubber composites inclusive of the tire, the durability and the other properties are conflicting with each other. That is, if it is intended to improve the durability, the other properties are degraded, while if it is intended to improve the other properties, the durability is degraded. Therefore, each of the rubber composite is made of a rubber composition having a proper plan compromised between both the properties, so that optimum plan of each rubber composite can not be realized at the present.

As to this type of the problem, JP-B-40-24384 suggests a method of solving such a problem. That is, this publication proposes a method wherein a given portion of a tire is formed while gradually changing from an uncured rubber material to another uncured rubber material when plural different uncured rubber materials are laid on an uncured carcass member.

In the method disclosed in the above publication, however, there are used the number of breakdown mills corresponding to the number of plural uncured rubber materials and a blending mill for blending these uncured rubber materials, so that a vast space is required. And also, uncontrollable deformation is caused in various uncured rubber strips between the breakdown mills or between the blending mill and a laying position of the uncured rubber material. For this end, it is very difficult to lay uncured rubber members having a precise sectional shape on the uncured carcass member. Therefore, the method described in the above publication can not be applied to the molding automation.

JP 07 156283 discloses a method for manufacturing a plastic Sheetlike by gradually mixing 2 components.

It is, therefore, an object of the invention to solve the aforementioned problems in the manufacture of the tire and other rubber composite and to provide a method for laminating band-shaped uncured rubber materials in a high productivity capable of establishing the sufficient holding of the durability in the tire or the other rubber composite and the application of optimizedly planed rubber composition to each rubber material and realizing highly precise given sectional shape and arrangement of each rubber material on the premise of space saving and molding automation.

It is another object of the invention to provide an apparatus for simply and compactly laminating band-shaped rubber materials in a low cost for realizing the above method.

According to a first aspect of the invention, there is the provision of a method of laminating band-shaped uncured rubber materials to form a laminated rubber member having a given sectional shape by helically winding a band-shaped uncured rubber material extruded through an extruder on a rotating support, which comprises using two or more rubber compositions indicating different moduli after the curing as a rubber material fed to the extruder;
extruding a first rubber material through the extruder and helically winding it on the rotating support to form a first rubber layer; and
continuously extruding the first rubber material and a second rubber material through the extruder so as to stepwise or gradually increase a blending ratio of the second rubber material to the first rubber material while holding the same extrusion sectional shape and helically winding on the first rubber layer while overlapping with at least a part of the first rubber layer to form a second rubber layer.

In a preferable embodiment of the invention, only the second rubber material is successively extruded through the extruder while holding the same extrusion sectional shape and helically wound on the second rubber layer so as to overlap with at least a part of the second rubber layer to form a third rubber layer.

In another preferable embodiment of the invention, the second rubber material and a third rubber material are successively extruded through the extruder so as to stepwise or gradually increase a blending ratio of the third rubber material to the second rubber material while holding the same extrusion sectional shape and helically wound on the third rubber layer while overlapping with at least a part of the third rubber layer to form a fourth rubber layer.

In the other preferable embodiment of the invention, only the third rubber material is successively extruded through the extruder while holding the same extrusion sectional shape and helically wound on the fourth rubber layer so as to overlap with at least a part of the fourth rubber layer to form a fifth rubber layer.

In a further preferable embodiment of the invention, the rubber material extruded through the extruder as a band-shaped rubber member is helically wound on the rotating support along a rotating axial direction of the support so as to overlap at least widthwise edge portions of the wound rubber members with each other.

In a still further preferable embodiment of the invention, two or more rubber materials have such a property that at least one of 100% modulus and 300% modulus after the curing differs by not less than 1.0 MPa between the two rubber materials to be extruded.

When two rubber materials are used as a rubber composition for innerliner for the cured tire, the first rubber material is at least one of an air-impermeable halogenated butyl rubber composition and butyl rubber composition, and the second rubber material is at least one of a natural rubber composition and a natural rubber based synthetic rubber composition.

Among three rubber materials, the first rubber material is a rubber composition for a tread under cushion in the cured tire, the second rubber material is a rubber composition for a tread base, and the third rubber material is a rubber composition for a tread cap.

Among three rubber materials, the first rubber material is a rubber composition for a bead filler in the cured tire, the second rubber material is a rubber composition for a sidewall and the third rubber material is a rubber composition for a rubber chafer.

According to a second aspect of the invention, there is the provision of an apparatus for laminating band-shaped uncured rubber materials to form a laminated rubber member, comprising a rotatable support to be wound on its surface with a band-shaped uncured rubber material, an extruder feeding a band-shaped uncured rubber material to the surface of the support, and two or more rubber material feeding devices individually feeding two or more kinds of rubber materials to the extruder, in which each of the rubber material feeding devices is provided with a feed control means for weighing a weight of a rubber material and adjusting a feeding quantity of a rubber material per unit time.

In a preferable embodiment of the invention, the extruder is provided with a control means for controlling feed time and feed stop time of the rubber material weighed through the feed control means to the extruder.

In another preferable embodiment of the invention, at least one of the support and the extruder is provided with a moving mechanism capable of relatively moving along a rotating axis of the support.

The invention will be described with reference to the accompanying drawings, wherein:
Fig. 1 is a diagrammatically side view illustrating an outline of an apparatus for laminating band-shaped uncured rubber materials according to the invention;
Fig. 2 is a diagrammatically section view of a first embodiment of the laminated rubber member;
Fig. 3 is a graph showing a relation between feeding ratio and feeding time in rubber materials fed for the formation of the first laminated rubber member shown in Fig. 2;
Fig. 4 is a diagrammatically section view of a second embodiment of the laminated rubber member;
Fig. 5 is a graph showing a relation between feeding ratio and feeding time in rubber materials fed for the formation of the second laminated rubber member shown in Fig. 4;
Fig. 6 is a diagrammatically section view of a third embodiment of the laminated rubber member;
Fig. 7 is a graph showing a relation between feeding ratio and feeding time in rubber materials fed for the formation of the third laminated rubber member shown in Fig. 6;
Fig. 8 is a diagrammatically section view of a fourth embodiment of the laminated rubber member;
Fig. 9 is a graph showing a relation between feeding ratio and feeding time in rubber materials fed for the formation of the fourth laminated rubber member shown in Fig. 8;
Fig. 10 is a schematic view illustrating modulus distribution of rubber materials after the curing of the fourth laminated rubber member shown in Fig. 8;
Fig. 11 is a diagrammatically left-half section view of an embodiment of the pneumatic tire according to the invention; and
Fig. 12 is a diagrammatically section view of an embodiment of the engine mount block according to the invention.

### DESCRIPTION OF PREFERRED EMBODIMENTS

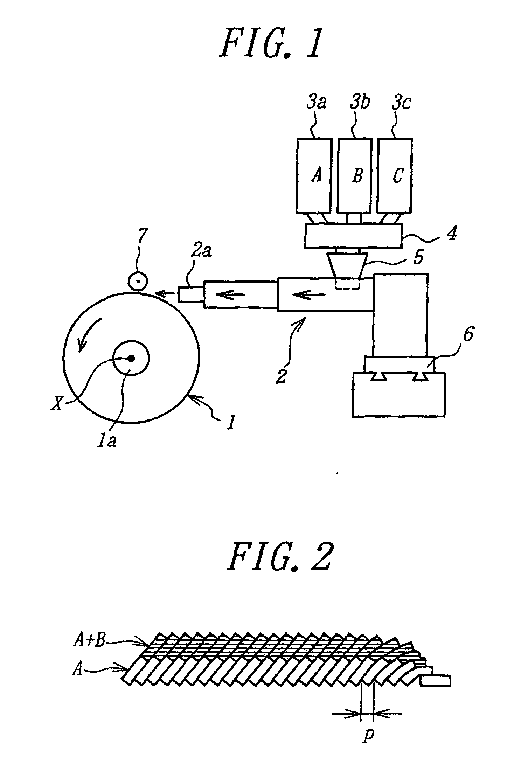

As shown in Fig. 1, the apparatus for laminating band-shaped uncured rubber materials according to the invention comprises a combination of a support 1 and an extruder 2.

The support 1 is attached to a shaft 1a rotating by a driving source (not shown). The support 1 is a forming drum, maintermediate body formed by winding a part of uncured rubber material, uncured rubberized cords and the like on the forming drum, a base tire for retreading and so on. Moreover, a base tire is a tire obtained by removing a remaining tread rubber or the like from a used tire.

A band-shaped uncured rubber material is wound on a surface of the support. In this case, an extruder 2 is arranged so as to locate a band-shaped rubber material feeding portion 2a of the extruder 2 in the vicinity of the surface of the support 1. The feeding portion 2a is provided with a usual extrusion die or a pair of upper and lower roll dies instead of the extrusion die.

The extruder 2 is provided with two or more rubber material feeding devices, three feeding devices 3a, 3b, 3c individually feeding three uncured rubber materials A, B, C in the illustrated embodiment. And also, the rubber material feeding devices 3a, 3b, 3c are provided with a feed control means 4 for individually adjusting feeding quantities of the rubber materials A, B, C, respectively. Each of the rubber materials A, B, C passed through the feed control means 4 is fed into the extruder 2 through a hopper and feeder 5.

Furthermore, the extruder 2 is provided with a control means (not shown) for controlling feed time and feed stop time of each of the rubber materials A, B, C weighed through the feed control means 4 to the extruder 2.

Moreover, the extruder 2 is provided with a straight line moving mechanism 6. The moving mechanism 6 straightforward moves the extruder 2 along a central axis line X of a rotating axis 1a of the support 1. By this moving mechanism is helically and continuously wound a band-shaped uncured rubber material extruded from the feeding portion 2a of the extruder 2 on the surface of the support 1.

The support 1 may be provided with a straight line moving mechanism instead of the moving mechanism 6. Further, if the surface of the support is a curved surface having a large curvature, the extruder 2 is provided with a turning mechanism (not shown) in addition to the moving mechanism 6. The turning mechanism turns the top of the feeding portion 2a along the curved surface of the support 1.

In the lamination apparatus, a guide roller 7 is arranged ahead the feeding portion 2a of the extruder 2. The guide roller 7 guides the band-shaped uncured rubber material extruded from the feeding portion 2a to a given position on the surface of the rotating support 1.

The method of laminating band-shaped uncured rubber materials extruded from the extruder 2 on the rotating support 1 will be described below.

The rubber materials A, B, C fed to the extruder 2 are rubber compositions having such a property that at least one of 100% modulus and 300% modulus after the curing differs by not less than 1.0 MPa between the two rubber materials to be extruded. That is, when the rubber material is fed to the extruder 2 in the order of rubber material A, rubber material B and rubber material C, the difference of modulus is not less than 1.0 MPa between the rubber materials A and B, and the difference of modulus is not less than 1.0 MPa between the rubber materials B and C. Either one of two rubber materials has a larger modulus.

At first, a first rubber material A is fed to the extruder 2 and extruded from the feeding portion 2 in form of a band-shaped uncured rubber material A, which is helically and successively wound on the rotating support 1 to form a first rubber layer A. Subsequently, a blend (A+B) of the first rubber material A and a second rubber material B is continuously fed to the extruder 2 and extruded from the feeding portion 2a of the extruder 2 in form of a band-shaped uncured rubber blend (A+B) while holding the same extrusion sectional shape, which is helically and successively wound on the first rubber layer to form a second rubber layer (A+B). Thus, a first laminated rubber member {A+(A+B)} is formed.

In this case, a blending ratio of the second rubber material B to the first rubber material A is stepwise and/or gradually increased. In the formation of the laminated rubber member as mentioned later, the blending ratio of the rubber materials is the same increment as mentioned above.

The helical windings of the band-shaped uncured rubber material A and the band-shaped uncured rubber blend (A+B) on the rotating support 1 are as follows. That is, the band-shaped uncured rubber material A or the band-shaped uncured rubber blend (A+B) is helically and successively wound on the rotating support 1 along a direction of an axial line X of a rotating axis 1a of the support 1 so as to overlap at least widthwise edge portions of the wound rubber materials with each other to form the first rubber layer A or the second rubber layer (A+B). Similarly, the rubber blend (A+B) is overlapped with at least a part of the first rubber layer A.

In Fig. 2 is shown a first laminated rubber member comprised of the first rubber layer A and the second rubber layer (A+B) formed by the method according to the invention at a section taken in the direction of the axial line X of the support 1. The band-shaped uncured rubber material A and the band-shaped uncured rubber blend (A+B) are helically wound on the rotating support 1 at a relatively small winding pitch p by starting the winding from a right side in the drawing. The lamination form is so-called ribbon laminated form or may be a mosaic form as mentioned later.

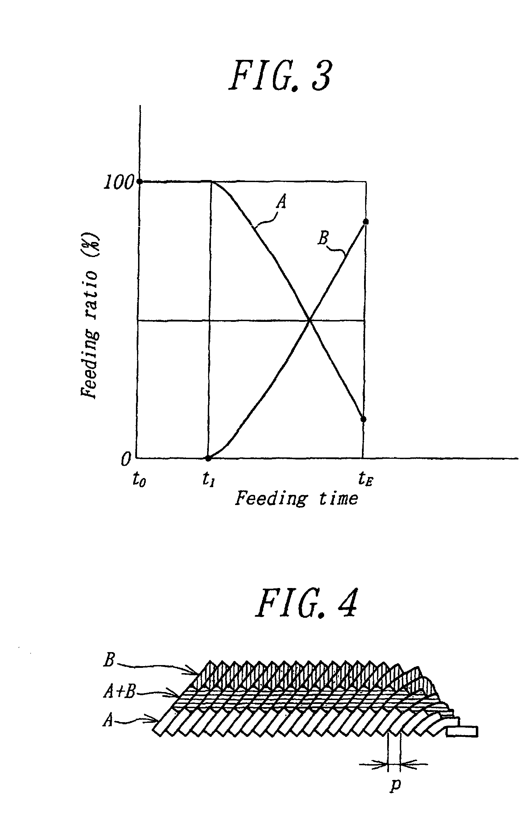

In Fig. 3 is shown a relation between feeding ratio (%) and feeding time (t) of the rubber materials A and B fed to the extruder 2 in the formation of the first laminated rubber member shown in Fig. 2. As shown in Fig. 3, only the rubber material A is fed to the extruder 2 from a feeding start time t₀ to a feeding time t₁. At the feeding time t₁, the feeding of the rubber material B is started to form a rubber blend (A+B). A total feeding quantity of each of the rubber materials A and B is 100% from the feeding start time to to feeding end time t_{E}. Moreover, the feeding quantity is volume.

After the formation of the first laminated rubber member {A+(A+B)}, only the rubber material B is continuously extruded from the extruder 2 while holding the same extrusion sectional shape as in the rubber blend (A+B). The thus extruded band-shaped uncured rubber material B is helically and successively wound on the first laminated rubber member {A+(A+B)} to form a third rubber layer B, whereby a second laminated rubber member {A+(A+B)+B} is formed. In this case, the rubber material B is overlapped with at least a part of the second rubber layer (A+B).

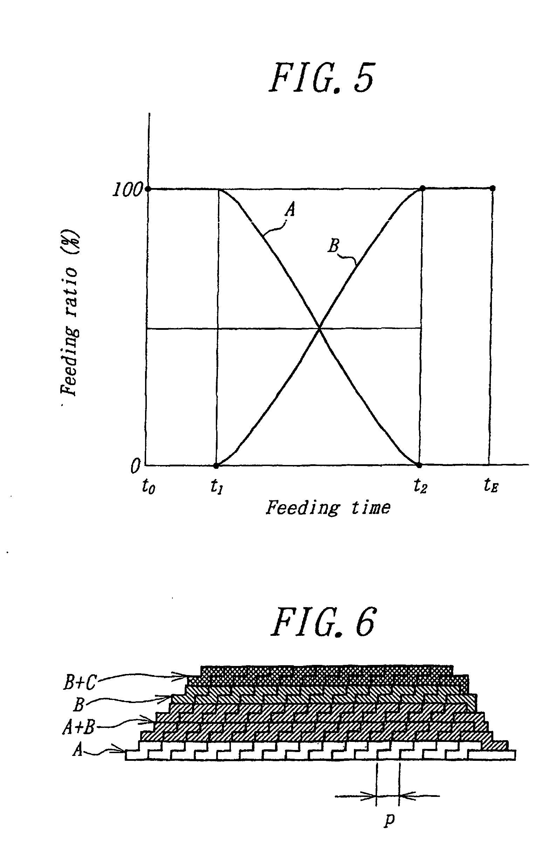

In Fig. 4 is shown the second laminated rubber member formed as mentioned above at a section taken in the direction of the axial line X of the support 1. Fig. 5 shows a relation between feeding ratio (%) and feeding time (t) of the rubber materials A and B fed to the extruder 2 in the formation of the second laminated rubber member shown in Fig. 4. As shown in Fig. 5, the feeding of the rubber material B starts at the feeding time t₁, while the feeding of the rubber material A stops at the feeding time t₂. A total feeding quantity of each of the rubber materials A and B is 100% from the feeding start time to to feeding end time t_{E}.

After the formation of the second laminated rubber member {A+(A+B)+B}, a blend (B+C) of the second rubber material B and a third rubber material C is subsequently and continuously fed to the extruder 2 and extruded from the feeding portion 2a of the extruder 2 in form of a band-shaped uncured rubber blend (B+C) while holding the same extrusion sectional shape, which is helically and successively wound on the second laminated rubber member {A+(A+B)+B} to form a fifth rubber layer (B+C). Thus, a third laminated rubber member {A+(A+B)+B+(B+C)} is formed.

The blending of the rubber material C to the rubber material B and the helical winding of the band-shaped uncured rubber blend (B+C) are substantially the same as in the formation of the second rubber layer.

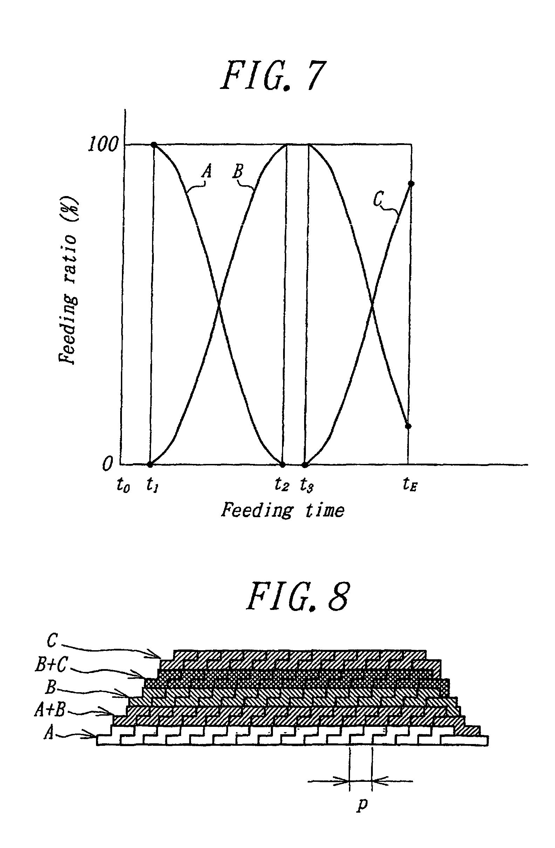

In Fig. 6 is shown the third laminated rubber member formed as mentioned above at a section taken in the direction of the axial line X of the support 1. Fig. 7 shows a relation between feeding ratio (%) and feeding time (t) of the rubber materials A, B and C fed to the extruder 2 in the formation of the third laminated rubber member shown in Fig. 6. As shown in Fig. 7, the feeding of the rubber material B starts at the feeding time t₁, while the feeding of the rubber material A stops at the feeding time t₂ and the feeding of the rubber material C starts at the feeding time t₃. A total feeding quantity of each of the rubber materials A, B and C is 100% from the feeding start time to to feeding end time t_{E}.

After the formation of the third laminated rubber member {A+(A+B)+B+(B+C)}, only the rubber material C is continuously extruded from the extruder 2 while holding the same extrusion sectional shape as in the rubber blend (B+C). The thus extruded band-shaped uncured rubber material C is helically and successively wound on the third laminated rubber member {A+(A+B)+B+(B+C)} to form a fifth rubber layer, whereby a fourth laminated rubber member {A+(A+B)+B+(B+C)+C} is formed. In this case, the rubber material C is overlapped with at least a part of the fourth rubber layer (B+C).

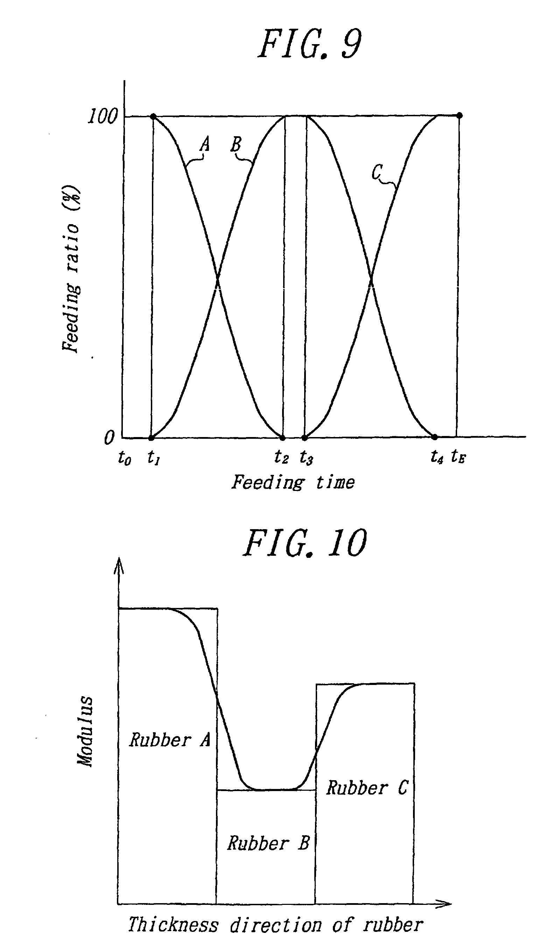

In Fig. 8 is shown the fourth laminated rubber member formed as mentioned above at a section taken in the direction of the axial line X of the support 1. Fig. 9 shows a relation between feeding ratio (%) and feeding time (t) of the rubber materials A, B and C fed to the extruder 2 in the formation of the fourth laminated rubber member shown in Fig. 8. As shown in Fig. 9, the feeding of the rubber material B starts at the feeding time t₁, and the feeding of the rubber material A stops at the feeding time t₂, while the feeding of the rubber material C starts at the feeding time t₃ and the feeding of the rubber material B stops at the feeding time t₄. A total feeding quantity of each of the rubber materials A, B and C is 100% from the feeding start time t₀ to feeding end time t_{E}.

In the formation of the laminated rubber members as mentioned above, the rubber materials A, B, and C are not necessarily the same rubber compositions between the two different laminated rubber members. The feeding time, change of feeding quantity of the rubber material with the lapse of the feeding time and the feeding stop time are controlled by the feed control means 4 and the control means.

The above lamination methods have the following effects (1)-(6).
(1) As shown in Fig. 10, a large step difference of rigidity is caused between adjoining rubbers And B and between adjoining rubbers B and C in the conventional laminated rubber member after the curing. On the contrary, according to the invention, the step difference of rigidity between the adjoining rubbers can be solved as shown by a curved line in Fig. 10. As a result, the occurrence of troubles such as peeling, separation and the like at the boundary face between the adjoining rubbers can be prevented and the durability of the laminated rubber member can largely be improved.
(2) In the conventional technique, there is a problem that poor adhesion of a rubber material to the other rubber material between the adjoining rubbers A and B or between the adjoining rubber B and C is caused due to the lacking of green tackiness in the formation, which can be completely solved by the lamination method according to the invention. As a result, there is no occurrence of unacceptable production based on the poor adhesion at the uncured state.
(3) In the conventional technique, for example, when one of the two adjoining rubbers is a halogenated butyl rubber composition or a butyl rubber composition and the other adjoining rubber is a natural rubber-based (NR) composition, isoprene rubber-based (IR) composition, styrene-butadiene rubber-based (SBR) composition or a blend thereof, the adhesion force after the curing becomes considerably insufficient. However, according to the lamination method of the invention, the sufficiently strong adhesion force can be obtained even in any kind of rubber materials.
(4) The band-shaped uncured rubber material to be helically wound on the rotating support 1 can be extruded through the extruder 1 while easily and continuously changing the kind of the rubber material. As a result, it is easy to completely automate the formation of the laminated rubber member and the total step number required for such a formation can largely be reduced and the productivity is considerably improved.
(5) The gauge and width of each band-shaped uncured rubber material can be set properly. And also, the finished sectional shape of the band-shaped uncured rubber material can be realized in a desired form at a high accuracy and high efficiency by approaching the top of the feeding portion 2a of the extruder 2 to the rotating support 1, partly overlapping the helically wound rubber materials with each other in the widthwise direction, and overlapping the winding rubber material with at least a part of the previously wound rubber material.
(6) A blend rubber region is formed in the laminated rubber member after the curing, so that an optimum property plan can be independently applied to each of the rubber materials A, B and C without taking care of properties of an adjoining rubber and the like. As a result, the laminated rubber member after the curing can ideally develop the higher properties.

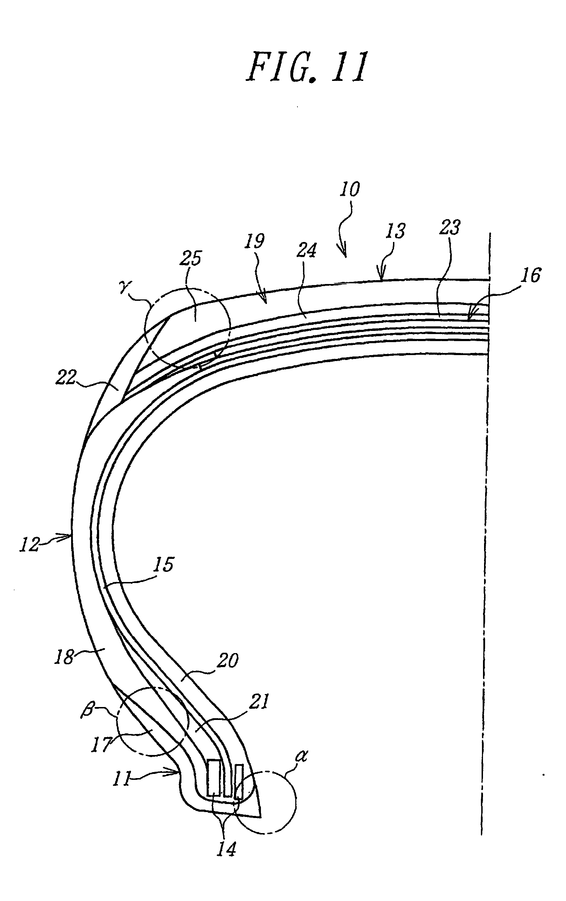

An example of applying the lamination method of band-shaped uncured rubber materials according to the invention to a pneumatic tire will be described with reference to Fig. 11.

As shown in Fig. 11, the tire 10 comprises a pair of bead portions 11, a pair of sidewall portions 12, and a tread portion 13. And also, the tire 10 comprises a radial carcass 15 of one or more rubberized plies extending between the pair of the bead portions 11 embedding a pair of bead cores 14 therein and reinforcing the portions 11, 12, 13 and a belt 16 superimposed about the radial carcass 15 and reinforcing the tread portion 13. An end portion of the radial carcass 15 is terminated between the pair of the bead cores 14.

Furthermore, the tire 10 has an innerliner rubber 20 as an inside rubber member and a bead filler rubber 21 as an inner reinforcing rubber member from the bead portion 11 to the sidewall portion 12. And also, the tire 10 has sometimes a mini-sidewall rubber 22 mediating between the sidewall rubber 18 and a tread rubber 19 as an outer rubber member.

In general, the tread rubber 19 has a multilayer structure comprised of a tread under cushion rubber 23 for ensuring the adhesion to the belt 16, a tread base rubber 24 as a middle layer and a tread cap rubber 25.

Almost all of the pneumatic tires for automobiles are tubeless tires. An important basic property required for the tubeless tire is airtightness for air filled inside the tire. For this end, at least one of air-impermeable halogenated butyl rubber composition and butyl rubber composition is used as the innerliner rubber 20.

On the other hand, a coating rubber for reinforcing cords in the radial carcass 15 is NR-based, IR-base or SBR-based rubber composition. Such a rubber composition is poor in the adhesion property to the halogenated butyl rubber composition or the butyl rubber composition after the curing and hence the peeling is frequently caused between the two rubbers. Therefore, either of the first laminated rubber member {A+(A+B)} and the second laminated rubber member {A+(A+B)+B} as mentioned above is applied to the innerliner rubber 20. In this case, the rubber material A and the rubber material (A+B) or the rubber material (A+B) and the rubber material B are overlapped with each other over an approximately full region.

The NR-based, IR-based or SBR-based rubber composition is used as the rubber material A, while the halogenated butyl rubber composition or the butyl rubber composition is used as the rubber material B. Thus, the properties of the rubber composition located near to the radial carcass 15 approach to those of the coating rubber for the reinforcing cords. As a result, there can be prevented the peeling between the coating rubber for the reinforcing cords and the innerliner rubber 20. Moreover, the coating rubber for the reinforcing cords has 100% modulus and 300% modulus higher by not less than 1 MPa than those of the halogenated butyl rubber composition or the butyl rubber composition.

In an α-region (toe portion) shown by a circle of a dot-dash line in Fig. 11 is existent a boundary face between a super-hard chafer rubber 17 having an excellent resistance to rim slippage and the soft innerliner rubber 20, so that the toe breakage is apt to be caused in the assembling and dissembling of the tire 10 to a rim. For this end, either of the third laminated rubber member {A+(A+B)+B+(B+C)} and the fourth laminated rubber member {A+(A+B)+B+(B+C)+C} is applied to the chafer rubber 17.

In this case, the above second laminated rubber member {A+(A+B)+B} is applied to the innerliner rubber 20, and thereafter BR-based rubber composition for the chafer rubber 17 is used as the rubber material C to form the third laminated rubber member {A+(A+B)+B+(B+C)} or the fourth laminated rubber member {A+(A+B)+B+(B+C)+C}. In the latter case, the rubber material (B+C) or {(B+C)+C} is overlapped with a part of both sides of the second laminated rubber member {A+(A+B)+B}. Moreover, 100% modulus of the chafer rubber 17 is 4.0-8.0 MPa and is higher by not less than 1 MPa than 100% modulus of the rubber material B after the curing. Thus, the toe breakage can be avoided.

In a β-region shown by a circle of dot-dash line in Fig. 11 is created a large bending strain under loading applied to the tire 10. On the other hand, the sidewall rubber 18 having excellent weather resistance and bending resistance has 100% modulus of 1.0-2.5 MPa, while the bead filler rubber 21 for reinforcing the bead portion 11 has 100% modulus of 5.0-10.0 MPa. As a result, the β-region indicates a modulus distribution shown in Fig. 10 in the direction of the rubber gauge, so that the peeling at the rubber boundary face is frequently caused in the β-region due to the step difference of modulus shown in Fig. 10.

According to the invention, therefore, the fourth laminated rubber member {A+(A+B)+B+(B+C)+C} is applied to the bead filler rubber 21, sidewall rubber 18 and chafer rubber 17, wherein the rubber material A is a rubber composition for the bead filler 21, the rubber material B is a rubber composition for the sidewall rubber 18 and the rubber material C is a rubber composition for the chafer rubber 17. When using the fourth laminated rubber member, the modulus distribution becomes curved line as shown in Fig. 10 and hence the step difference of modulus is actually removed and the peeling at the rubber boundary face hardly occurs. Even in this case, the rubber materials to be laminated are partly overlapped with each other.

In a γ-region shown by a circle of dot-dash line in Fig. 11 is created a large strain under loading applied to the tire 10. On the other hand, 300% modulus is 15-18 MPa in the same kind of the tread under cushion rubber 23 as a high modulus coating rubber suitable for steel cords, 5-12 MPa in the tread base rubber 24 being rich in the cushionability, and 7-13 MPa in the tread cap rubber 25 having excellent wear resistance and steering stability. In fact, the modulus difference between the adjoining rubbers is not less than 1.0 MPa. Therefore, the γ-region indicates a modulus distribution shown in Fig. 10 in the direction of the rubber gauge, so that the peeling at the rubber boundary face is frequently caused in the γ-region due to the step difference of modulus shown in Fig. 10.

For this end, the fourth laminated rubber member is applied to the tread rubber 19, wherein the rubber material A is a rubber composition for the tread under cushion rubber 23, the rubber material B is a rubber composition for the tread base rubber 24 and the rubber material C is a rubber composition for the tread cap rubber 25. When using the fourth laminated rubber member, the modulus distribution becomes curved line as shown in Fig. 10 and hence the step difference of modulus is actually removed and the peeling at the rubber boundary face hardly occurs. In this case, the rubber materials to be laminated are overlapped with each other over an approximately full width.

As a modified embodiment, a fifth laminated rubber member may be formed by using a rubber material D as a rubber composition for the mini-sidewall rubber 22 having an excellent conductivity. In this case, the rubber material D is a rubber composition for the sidewall rubber 18. A rubber layer made of the rubber material D is overlapped with a part of both sides of the other laminated rubber members.

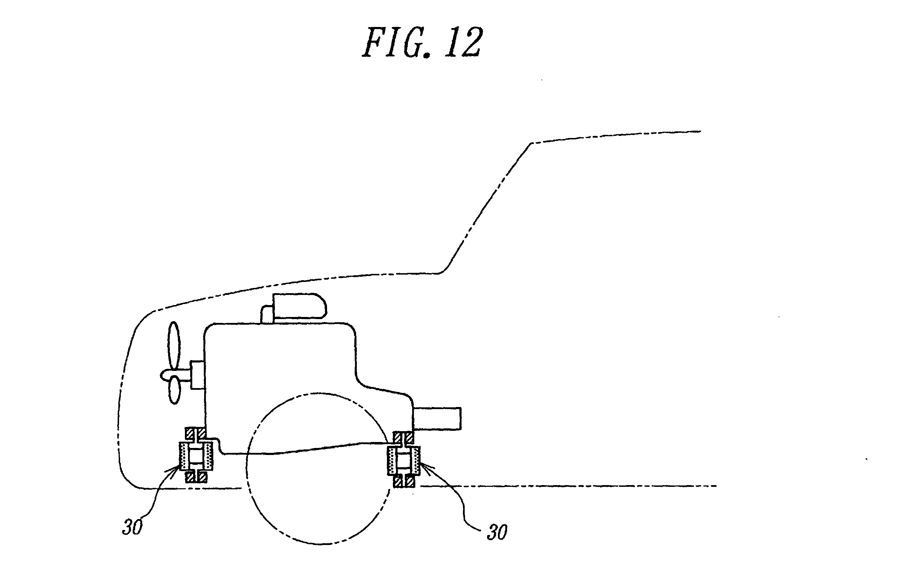

As another embodiment of the invention, Fig. 12 diagrammatically shows a section of an engine mount block 30 used in an automobile. The engine mount block 30 is required to use a rubber having a vibration damping effect as high as possible on one hand and a rubber having an excellent weather resistance on the other hand. Therefore, the second laminated rubber member {A+(A+B)+B} is applied to the engine mount block 30.

That is, the rubber material A as a rubber composition having an excellent weather resistance is used in an outer rubber of the engine mount block 30 and the rubber material B as a rubber composition having a high vibration damping effect is used in an inner rubber thereof. Thus, the performances required in the engine mount block can sufficiently be attained by using the rubber materials having conflicting rubber properties. Even in this case, the rubber material A, rubber blend (A+B) and rubber material B are overlapped with each other over an approximately full region.

The lamination method according to the invention as previously mentioned is applicable to a rubber vibration isolator, a marine fender and the like,in addition to the engine mount block 30.

As mentioned above, according to the invention, there can be provided a method of laminating band-shaped uncured rubber materials with a high productivity in the production of tire and other rubber composites which can simultaneously establish the holding of sufficient durability of the tire or other rubber composite and the application of optimum planned rubber composition to each rubber member under the forming automation in space saving and easily realize high-accuracy desirable sectional shape and arrangement of each rubber member.

Furthermore, the invention can provide an apparatus for laminating band-shaped uncured rubber materials in a low cost which has a simple and compact structure and can surely realize the lamination method as mentioned above.

## Claims

1. A method of laminating band-shaped uncured rubber materials to form a laminated rubber member having a given sectional shape by helically winding a band-shaped uncured rubber material extruded through an extruder (2) on a rotating support (1), using two or more rubber compositions exhibiting different moduli after curing as a rubber material fed to the extruder (2), the method comprising:
extruding a first rubber material (A) through the extruder (2) and helically winding it on the rotating support (1) to form a first rubber layer (A), and
continuously extruding the first rubber material (A) and a second rubber material (B) through the extruder (2) so as to stepwise or gradually increase the blending ratio of the second rubber material (B) to the first rubber material (A) while holding the same extrusion sectional shape and helically winding on the first rubber layer (A) while overlapping with at least a part of the first rubber layer (A), to form a second rubber layer (A+B).

2. A method according to claim 1, further comprising successively extruding only the second rubber material (B) through the extruder (2) while holding the same extrusion sectional shape and helically winding on the second rubber layer (A+B) so as to overlap with at least a part of the second rubber layer (A+B), to form a third rubber layer (B).

3. A method according to claim 2, further comprising successively extruding the second rubber material (B) and a third rubber material (C) through the extruder (2) so as to stepwise or gradually increase the blending ratio of the third rubber material (C) to the second rubber material (B) while holding the same extrusion sectional shape and helically winding on the third rubber layer (B) while overlapping with at least a part of the third rubber layer (B), to form a fourth rubber layer (B+C).

4. A method according to claim 3, further comprising successively extruding material (C) through the extruder (2) while holding the same extrusion sectional shape and helically winding on the fourth rubber layer (B+C) so as to overlap with at least a part of the fourth rubber layer (B+C), to form a fifth rubber layer (C).

5. A method according to any preceding claim, wherein the rubber material extruded through the extruder (2) as a band-shaped rubber member is helically wound on the rotating support (1) along a rotating axial direction of the support (1) so as to overlap at least widthwise edge portions of the wound rubber member with each other.

6. A method according to any preceding claim, wherein two or more rubber materials are used which have such a property that at least one of the 100% modulus and the 300% modulus after curing differs by not less than 1.0 MPa between the rubber materials.

7. A method according to any of claims 1 to 6, wherein when two rubber materials are used as a rubber composition for an innerliner (20) for a cured tire, one rubber material is at least one of an air-impermeable halogenated butyl rubber composition and butyl rubber composition, and the other rubber material is at least one of a natural rubber composition and a natural rubber based synthetic rubber composition.

8. A method according to any of claims 3 to 6, wherein among the three rubber materials (A,B,C), the first rubber material (A) is a rubber composition for a tread under cushion (23) in a cured tire, the second rubber material (B) is a rubber composition for a tread base (24), and the third rubber material (C) is a rubber composition for a tread cap (25).

9. A method according to any of claims 3 to 6, wherein among the three rubber materials (A,B,C), the first rubber material (A) is a rubber composition for a bead filler (2) in a cured tire, the second rubber material (B) is a rubber composition for a sidewall (18), and the third rubber material (C) is a rubber composition for a rubber chafer (17).

10. Apparatus for laminating band-shaped uncured rubber materials to form a laminated rubber member, comprising an extruder (2) for feeding a band-shaped uncured rubber material to the surface of a rotatable support (1) to be wound on its surface with the band-shaped uncured rubber material, and two or more rubber material feeding devices (3a,3b,3c) for individually feeding two or more kinds of rubber materials (A,B,C) to the extruder (2), in which each of the rubber material feeding devices (3a,3b,3c) is provided with feed control means (4) for weighing the rubber material and adjusting the feeding quantity of rubber material per unit time.

11. Apparatus according to claim 10, wherein the extruder (2) is provided with control means for controlling feed time and feed stop time of the rubber material weighed through the feed control means (4) to the extruder (2).

12. Apparatus according to claim 10 or 11, including a moving mechanism (6) capable of moving at least one of the extruder (2) and the support (1) relatively along a rotating axis(1a) of the support (1).

## Patentansprüche

1. Verfahren zum Laminieren von bandförmigen, unvulkanisierten Gummimaterialien, um ein laminiertes Gummielement, das eine vorgegebene Querschnittsform hat, durch schraubenförmiges Aufwickeln eines bandförmigen, unvulkanisierten Gummimaterials, das mittels eines Extruders (2) auf eine rotierende Unterlage (1) extrudiert wird, zu bilden, wobei zwei oder mehr Gummizusammensetzungen, die nach dem Vulkanisieren verschiedene Elastizitätsmodule haben, als ein dem Extruder (2) zugeführtes Gummimaterial verwendet werden, wobei das Verfahren die Schritte aufweist, bei denen:
ein erstes Gummimaterial (A) mittels des Extruders (2) extrudiert wird, und schraubenförmig auf die rotierende Unterlage (1) aufgewickelt wird, um eine erste Gummischicht (A) zu bilden, und
das erste Gummimaterial (A) und ein zweites Gummimaterial (B) mittels des Extruders (2) kontinuierlich extrudiert werden, wobei das Mischungsverhältnis des zweiten Gummimaterials (B) zu dem ersten Gummimaterial (A) stufenweise oder graduell erhöht wird, während die gleiche Extrusions-Querschnittsform beibehalten wird, und schraubenförmig auf die erste Gummischicht (A) aufgewickelt werden, während sie mindestens einen Teil der ersten Gummischicht (A) überlappen, um eine zweite Gummischicht (A+B) zu bilden.

2. Verfahren gemäß Anspruch 1, das weiterhin die Schritte aufweist, bei denen nur das zweite Gummimaterial (B) mittels des Extruders (2) in aufeinanderfolgender Weise extrudiert wird, während die gleiche Extrusions-Querschnittsform beibehalten wird, und auf die zweite Gummischicht (A+B) schraubenförmig aufgewickelt wird, wobei sie mindestens einen Teil der zweiten Gummischicht (A+B) überlappt, um eine dritte Gummischicht (B) zu bilden.

3. Verfahren gemäß Anspruch 2, das weiterhin die Schritte aufweist, bei denen das zweite Gummimaterial (B) und ein drittes Gummimaterial (C) mittels des Extruders (2) in aufeinanderfolgender Weise extrudiert werden, wobei das Mischungsverhältnis des dritten Gummimaterials (C) zu dem zweiten Gummimaterial (B) stufenweise oder graduell erhöht wird, während die gleiche Extrusions-Querschnittsform beibehalten wird, und schraubenförmig auf die dritte Gummischicht (B) aufgewickelt werden, während sie mindestens einen Teil der dritten Gummischicht (B) überlappen, um eine vierte Gummischicht (B+C) zu bilden.

4. Verfahren gemäß Anspruch 3, das weiterhin die Schritte aufweist, bei denen das Material (C) mittels des Extruders (2) in aufeinanderfolgender Weise extrudiert wird, während die gleiche Extrusions-Querschnittsform beibehalten wird, und schraubenförmig auf die vierte Gummischicht (B+C) aufgewickelt wird, wobei es mindestens einen Teil der vierten Gummischicht (B+C) überlappt, um eine fünfte Gummischicht (C) zu bilden.

5. Verfahren gemäß irgendeinem vorhergehenden Anspruch, wobei das mittels des Extruders (2) als ein bandförmiges Gummielement extrudierte Gummimaterial längs einer axialen Rotationsrichtung der Unterlage (1) schraubenförmig auf die rotierende Unterlage (1) aufgewickelt wird, wobei mindestens Breitenrichtungs-Randbereiche des aufgewickelten Gummielements sich überlappen.

6. Verfahren gemäß irgendeinem vorhergehenden Anspruch, wobei zwei oder mehr Gummimaterialien verwendet werden, die eine solche Eigenschaft haben, daß mindestens entweder der 100%-Elastizitätsmodul oder der 300%-Elastizitätsmodul nach dem Vulkanisieren sich bei den Gummimaterialien um nicht weniger als 1,0 MPa unterscheiden.

7. Verfahren gemäß irgendeinem der Ansprüche 1 bis 6, wobei dann, wenn zwei Gummimaterialien als eine Gummizusammensetzung für eine Zwischenlage (20) für einen vulkanisierten Reifen verwendet werden, ein Gummimaterial mindestens eine luftundurchlässige, halogenisierte Butylgummizusammensetzung oder eine Butylgummizusammensetzung ist, und das andere Gummimaterial mindestens eine Naturgummizusammensetzung, oder eine Synthesegummizusammensetzung auf Naturgummibasis ist.

8. Verfahren gemäß irgendeinem der Ansprüche 3 bis 6, wobei unter den drei Gummimaterialien (A, B, C) das erste Gummimaterial (A) eine Gummizusammensetzung für ein Laufflächen-Unterkissen (23) bei einem vulkanisierten Reifen ist, das zweite Gummimaterial (B) eine Gummizusammensetzung für eine Laufflächenbasis (24) ist, und das dritte Gummimaterial (C) eine Gummizusammensetzung für eine Laufflächenauflage (25) ist.

9. Verfahren gemäß irgendeinem der Ansprüche 3 bis 6, wobei unter den drei Gummimaterialien (A, B, C) das erste Gummimaterial (A) eine Gummizusammensetzung für einen Wulstfüller (2) bei einem vulkanisierten Reifen ist, das zweite Gummimaterial (B) eine Gummizusammensetzung für eine Seitenwand (18) ist, und das dritte Gummimaterial (C) eine Gummizusammensetzung für einen Gummi-Wulstschutzstreifen (17) ist.

10. Vorrichtung zum Laminieren von bandförmigen, unvulkanisierten Gummimaterialien, um ein laminiertes Gummielement zu bilden, aufweisend einen Extruder (2), um der einer rotierbaren Unterlage (1) ein bandförmiges, unvulkanisiertes Gummimaterial zuzuführen, das auf die Oberfläche mit dem bandförmigem unvulkanisiertem Gummimaterial aufgewickelt werden soll, und zwei oder mehr Gummimaterial-Zuführvorrichtungen (3a, 3b, 3c), um dem Extruder (2) zwei oder mehr Arten von Gummimaterialien (A, B, C) einzeln zuzuführen, wobei jede der Gummimaterial-Zuführvorrichtungen (3a, 3b, 3c) mit Zuführungssteuermitteln (4) zum Wiegen des Gummimaterials und Einstellen der Zuführmenge des Gummimaterials pro Zeiteinheit versehen ist.

11. Vorrichtung gemäß Anspruch 10, wobei der Extruder (2) mit Steuermitteln versehen ist, um die Zuführzeit und die Zuführstoppzeit des mittels der Zuführungssteuermittel (4) gewogenen und dem Extruder (2) zugeführten Gummimaterials zu steuern.

12. Vorrichtung gemäß Anspruch 10 oder 11, umfassend eine Verschiebevorrichtung (6), die mindestens den Extruder (2) oder die Unterlage (1) relativ zueinander längs einer Rotationsachse (1a) der Unterlage (1) verschieben kann.

## Revendications

1. Procédé de laminage de matériaux de caoutchouc non vulcanisé en forme de bande pour former un élément de caoutchouc laminé ayant une forme de section définie en enroulant hélicoïdalement un matériau de caoutchouc non vulcanisé en forme de bande extrudé à travers une extrudeuse (2) sur un support rotatif (1), avec utilisation de deux ou de plusieurs compositions de caoutchouc présentant des modules différents après la vulcanisation dans le matériau de caoutchouc amené vers l'extrudeuse (2); le procédé comprenant les étapes ci-dessous :
extrusion d'un premier matériau de caoutchouc (A) à travers l'extrudeuse (2) et enroulement hélicoïdal de celui-ci sur le support rotatif (1) pour former une première couche de caoutchouc (A); et
extrusion continue du premier matériau de caoutchouc (A) et d'un deuxième matériau de caoutchouc (B) à travers l'extrudeuse (2), de sorte à accroître par étapes ou progressivement un rapport de mélange du deuxième matériau de caoutchouc (B) dans le premier matériau de caoutchouc (A), tout en maintenant la même forme de section d'extrusion, et en les enroulant hélicoïdalement sur la première couche de caoutchouc (A), chevauchant au moins une partie de la première couche de caoutchouc (A) pour former une deuxième couche de caoutchouc (A+B).

2. Procédé selon la revendication 1, comprenant en outre l'extrusion successive du seul deuxième matériau de caoutchouc (B) à travers l'extrudeuse (2), tout en maintenant la même forme de section d'extrusion et en l'enroulant hélicoïdalement sur la deuxième couche de caoutchouc (A+B), de sorte à chevaucher au moins une partie de la deuxième couche de caoutchouc (A+B), pour former une troisième couche de caoutchouc (B).

3. Procédé selon la revendication 2, comprenant en outre l'extrusion successive du deuxième matériau de caoutchouc (B) et d'un troisième matériau de caoutchouc (C) à travers l'extrudeuse (2), de sorte à accroître par étapes ou progressivement un rapport de mélange du troisième matériau de caoutchouc (C) dans le deuxième matériau de caoutchouc (B), tout en maintenant la même forme de section d'extrusion et en l'enroulant hélicoïdalement sur la troisième couche de caoutchouc (C), chevauchant au moins une partie de la troisième couche de caoutchouc (B) pour former une quatrième couche de caoutchouc (B+C).

4. Procédé selon la revendication 3, comprenant en outre l'extrusion successive de matériau (C) à travers l'extrudeuse (2) tout en maintenant la même forme de section d'extrusion et en l'enroulant hélicoïdalement sur la quatrième couche de caoutchouc (B+C), de sorte à chevaucher au moins une partie de la quatrième couche de caoutchouc (B+C), pour former une cinquième couche de caoutchouc (C ).

5. Procédé selon l'une quelconque des revendications précédentes, dans lequel le matériau de caoutchouc extrudé à travers l'extrudeuse (2) comme élément de caoutchouc en forme de bande est enroulé hélicoïdalement sur le support rotatif (1) le long d'une direction axiale rotative du support (1), de sorte à chevaucher au moins les parties de bordure dans le sens de la largeur de l'élément de caoutchouc enroulé.

6. Procédé selon l'une quelconque des revendications précédentes, dans lequel deux ou plusieurs matériaux de caoutchouc sont utilisés, présentant des propriétés telles que le module à 100% ou le module à 300% présente une différence non inférieure à 1,0 Mpa entre les matériaux de caoutchouc après la vulcanisation.

7. Procédé selon l'une quelconque des revendications 1 à 6, dans lequel les deux matériaux de caoutchouc sont utilisés comme composition de caoutchouc pour un calandrage intérieur (20) d'un bandage pneumatique vulcanisé, un matériau de caoutchouc étant constitué par au moins une composition de caoutchouc butyle halogéné imperméable à l'air ou une composition de caoutchouc butyle, l'autre matériau de caoutchouc étant constitué par au moins une composition de caoutchouc naturel ou une composition de caoutchouc synthétique à base de caoutchouc naturel.

8. Procédé selon l'une quelconque des revendications 3 à 6, dans lequel, parmi les trois matériaux de caoutchouc (A, B, C), le premier matériau de caoutchouc (A) est une composition de caoutchouc pour un rembourrage de la bande de roulement (23) dans un bandage pneumatique vulcanisé, le deuxième matériau de caoutchouc (B) étant une composition de caoutchouc pour une base de la bande de roulement (24) et le troisième matériau de caoutchouc (C) étant une composition de caoutchouc pour une chape (25).

9. Procédé selon l'une quelconque des revendications 3 à 6, dans lequel, parmi les trois matériaux de caoutchouc (A, B, C), le premier matériau de caoutchouc (A) est une composition de caoutchouc pour un bourrage sur tringle (2) dans un bandage pneumatique vulcanisé, le deuxième matériau de caoutchouc (B) étant une composition de caoutchouc pour un flanc (18) et le troisième matériau de caoutchouc (C) étant une composition de caoutchouc pour une bandelette talon (17).

10. Dispositif pour laminer des matériaux de caoutchouc non vulcanisé en forme de bande pour former un élément de caoutchouc laminé, comprenant une extrudeuse (2) amenant un matériau de caoutchouc non vulcanisé en forme de bande vers la surface d'un support rotatif (1), sur la surface duquel doit être enroulé le matériau de caoutchouc non vulcanisé en forme de bande, et deux ou plusieurs dispositifs d'alimentation du caoutchouc (3a, 3b, 3c), amenant individuellement deux ou plusieurs sortes de matériaux de caoutchouc (A, B, C) vers l'extrudeuse (2), chacun des dispositifs d'alimentation du matériau de caoutchouc (3a, 3b, 3c) comportant un moyen de commande de l'alimentation (4), destiné à peser le matériau de caoutchouc et à ajuster la quantité d'alimentation d'un matériau de caoutchouc par unité de temps.

11. Dispositif selon la revendication 10, dans lequel l'extrudeuse (2) comporte un moyen de commande pour assurer la commande du temps d'alimentation et du moment d'arrêt de l'alimentation du matériau de caoutchouc pesé par le moyen de commande de l'alimentation (4) et amené vers l'extrudeuse (2).

12. Dispositif selon les revendications 10 ou 11, englobant un mécanisme de déplacement (6) capable d'entraîner un déplacement relatif d'au moins l'extrudeuse (2) ou du support (1) le long d'un axe de rotation (1a) du support (1).
